# FASCICULE DE BREVET EUROPEEN

(11) **EP 2 443 021 B1**
(45) Date de publication et mention de la délivrance du brevet: **25.03.2015**
(21) Numéro de dépôt: 10728795.5
(22) Date de dépôt: 20.05.2010
(51) Int. Cl.: B62D 25/16, B62D 21/15

(54) **DISPOSITIF DE FIXATION D'AILE AVANT DE CARROSSERIE D'UN VEHICULE AUTOMOBILE**
VORRICHTUNG ZUR BEFESTIGUNG DES VODEREN STOSSFÄNGERS EINES FAHRZEUGAUFBAUS
DEVICE FOR ATTACHING THE FRONT FENDER OF AUTOMOBILE BODYWORK

(30) Priorité: 19.06.2009 FR 0954187
(43) Date de publication de la demande: 25.04.2012
(73) Titulaire: PEUGEOT CITROËN AUTOMOBILES SA, 78140 Velizy-Villacoublay (FR)
(72) Inventeur: BENANE, Saïd, F-94550 Chevilly Larue (FR)
(74) Mandataire: Fernandez, Francis Lionel
(86) Numéro de dépôt international: PCT/FR2010/050980
(87) Numéro de publication internationale: WO 2010/146263

(56) Documents cités:
- DE-A1- 10 231 809
- DE-A1-102005 039 055

## Description

La présente invention concerne la carrosserie d'un véhicule automobile, et plus précisément la fixation des ailes avant de cette carrosserie.

La carrosserie d'un véhicule automobile comporte des ailes, qui sont les parties de la carrosserie enveloppant les roues du véhicule. Les ailes avant de cette carrosserie, qui enveloppent les roues avant du véhicule, sont situées des deux côtés du véhicule, à l'avant des portières avant. Chaque aile avant est assemblée à la structure du véhicule par l'intermédiaire de plusieurs dispositifs de fixation, dont un est situé à l'avant de l'aile avant, et un autre en partie supérieure de l'aile avant.

Le bord avant de chaque aile avant est en contact avec le bloc avant du véhicule, constitué notamment par le pare-choc avant et les blocs optiques de celui-ci. Lorsque le bloc avant subit un choc, par exemple lors d'un accident de circulation, il est repoussé vers l'arrière et exerce un appui sur le bord avant de l'aile avant. L'aile avant peut alors être violemment repoussée vers l'arrière du véhicule. Ce choc peut entraîner des mouvements importants de certaines parties de l'aile avant pouvant causer des déformations importantes et des déchirements de l'aile, ou une rupture de certaines des fixations de l'aile.

De plus, certaines parties de l'aile étant repoussées vers l'arrière, une partie de l'arrière de l'aile avant peut entrer en contact avec l'avant de la portière avant du véhicule, entraînant l'endommagement de celle-ci. Un tel choc sur le bloc avant peut donc entraîner une détérioration importante de la carrosserie, nécessitant la réparation ou le remplacement de plusieurs des éléments de celle-ci.

Il apparaît connu du document DE102005039055 un dispositif de fixation de l'avant d'une aile avant à la structure d'un véhicule, notamment automobile, comprenant une pièce de liaison fixée d'une part à la structure du véhicule et d'autre part à l'avant de l'aile avant du véhicule, et qui présente au moins une zone d'affaiblissement permettant à la pièce de liaison d'être déformable pour permettre un déplacement contrôlé de l'avant de l'aile avant relativement à la structure du véhicule, en cas de choc, la pièce de liaison constituée par une plaque positionnée verticalement, fixée à la structure du véhicule au niveau de ses deux extrémités latérales.

La présente invention a pour objectif de pallier ces inconvénients de l'art antérieur.

En particulier, la présente invention a pour objectif de limiter les détériorations causées à la carrosserie d'un véhicule automobile par un choc entraînant un déplacement vers l'arrière du bloc avant du véhicule.

Plus précisément, un objectif de l'invention est de limiter les déformations de l'aile avant du véhicule quand elle est repoussée vers l'arrière par le bloc avant. Un autre objectif est d'éviter qu'un tel choc n'entraîne un contact entre l'arrière de l'aile avant et l'avant de la portière avant correspondante.

Ces objectifs, ainsi que d'autres qui apparaîtront plus clairement par la suite, sont atteints par un dispositif de fixation de l'avant d'une aile avant à la structure d'un véhicule, notamment automobile, comprenant, selon l'invention, une pièce de liaison, fixée d'une part à la structure du véhicule et d'autre part à l'avant de l'aile avant du véhicule, et qui présente au moins une zone d'affaiblissement permettant à la pièce de liaison d'être déformable pour permettre un déplacement contrôlé de l'avant de l'aile avant relativement à la structure du véhicule, en cas de choc.

Cette pièce de liaison est constituée par une plaque positionnée verticalement, fixée à la structure du véhicule au niveau de ses deux extrémités latérales et pliée autour d'un axe vertical de façon à présenter une première portion, également appelée portion transversale, s'étendant sensiblement perpendiculairement à la direction d'avancement du véhicule et une seconde portion, également appelée portion longitudinale, s'étendant sensiblement perpendiculairement à la direction transversale du véhicule.

La déformation de cette pièce de liaison peut ainsi, en cas de choc, absorber une partie de l'énergie de ce choc. De plus, le fait qu'un déplacement de l'avant de l'aile soit rendu possible permet de mieux répartir les contraintes exercées sur cette aile, et par conséquent de limiter sa déformation.

Avantageusement, chaque zone d'affaiblissement de la pièce de liaison autorise une déformation de la pièce de liaison dans un plan horizontal.

De cette façon, la pièce de liaison peut se déformer quand un choc exerce une pression dans une direction sensiblement horizontale, mais ne se déforme pas sous le poids de l'aile, qui s'exerce verticalement.

Selon un mode de réalisation avantageux de l'invention, la pièce de liaison présente au niveau de chaque zone d'affaiblissement une section conformée de façon à présenter un moment quadratique par rapport à un axe vertical plus faible que les autres sections de la pièce de liaison, afin de favoriser une déformation par pliage de la pièce de liaison au niveau de lignes de pliures verticales passant par la zone d'affaiblissement.

De façon préférentielle, chaque zone d'affaiblissement est située entre la partie de fixation de la pièce de liaison à l'aile et une partie de fixation de la pièce de liaison à la structure.

Avantageusement, ladite plaque comporte une portion arrondie situées entre lesdites première et seconde portions.

De préférence, ladite plaque présente au niveau de ladite portion arrondie des reliefs augmentant le moment quadratique de sa section par rapport à un axe vertical. Ces reliefs permettent donc d'augmenter sa résistance à une déformation dans un plan horizontal.

De façon préférentielle, ladite aile avant est fixée à ladite pièce de liaison par l'intermédiaire d'une pièce de support solidaire de la pièce de liaison.

La présente invention concerne également un véhicule automobile équipé d'au moins un dispositif de fixation de l'avant d'une aile avant tel que décrit ci-dessus.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 est une vue de face d'éléments de structure d'un véhicule automobile portant un bloc optique et une aile avant dont l'avant est fixé à la structure du véhicule par l'intermédiaire d'un dispositif de fixation selon un mode de réalisation de l'invention ;
- les figures 2, 3 et 4 sont des vues en perspective d'éléments de structure du véhicule de la figure 1, équipés du dispositif de fixation de l'avant de l'aile avant représenté à la figure 1 ;
- la figure 5 est une vue en perspective des éléments de structure et du dispositif de fixation de l'avant de l'aile avant représentés à la figure 4, dans laquelle le dispositif de fixation est déformé sous l'effet d'un choc repoussant l'aile avant vers l'arrière du véhicule ;
- la figure 6 est une vue en perspective d'une pièce de support appartenant au dispositif de fixation représenté sur les figures 1 à 5 ; et
- les figures 7 et 8 représentent l'assemblage d'une aile avant sur un dispositif de fixation selon un mode de réalisation de l'invention.

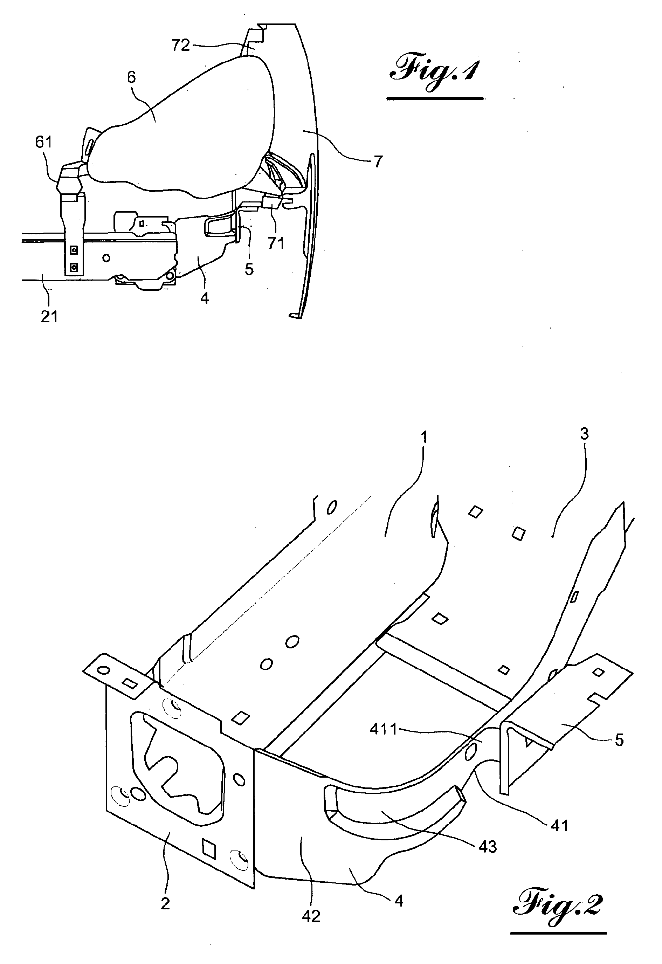

La figure 1 est une vue de face d'éléments de structure d'un véhicule automobile portant une aile avant 7 et un bloc optique 6 fixés à la structure du véhicule par l'intermédiaire de plusieurs dispositifs de fixation, parmi lesquels un dispositif de fixation de l'avant de l'aile avant selon un mode de réalisation de l'invention.

L'aile avant 7 est assemblée à la structure du véhicule par l'intermédiaire de plusieurs pattes de fixation, parmi lesquelles la patte de fixation avant 71 et la patte de fixation supérieure 72 qui sont soudées à l'aile. Au niveau de la patte de fixation supérieure 72, l'aile avant est assemblée par des vis à la doublure d'aile (non représentée) qui est une pièce de carrosserie elle-même fixée à la structure du véhicule. Au niveau de la patte de fixation avant 71, l'avant de l'aile avant est assemblé par des vis à une pièce de support 5 qui appartient au dispositif de fixation de l'avant de l'aile avant 7.

Le bloc optique 6, qui fait partie avec le pare-choc (non représenté) du bloc avant du véhicule, est placé contre le bord de l'aile avant 7, entre sa patte de fixation avant 71 et sa patte de fixation supérieure 72. Il est fixé à l'aile avant 7 au niveau de ces deux pattes de fixation, et à une traverse 21 faisant partie de la structure du véhicule, par l'intermédiaire d'une liaison souple 61.

En cas de choc sur le bloc avant du véhicule et notamment sur le pare-choc, par exemple lors d'un accident de la circulation, le bloc optique 6 est poussé vers l'arrière du véhicule. Il exerce alors sur l'aile avant une pression tendant à la pousser vers l'arrière, s'exerçant notamment au niveau des pattes de fixation avant 71 et supérieure 72 de l'aile avant 7.

Avec le dispositif de fixation de l'avant de l'aile selon l'art antérieur, la patte de fixation avant 71 de l'aile avant était fixée rigidement à la tôle de passage de roue 3, qui fait partie de la structure rigide du véhicule. En revanche, la patte de fixation supérieure 72 de l'aile avant était fixée à la doublure d'aile qui présente une certaine souplesse. Le recul du bloc optique 6 entraînait par conséquent un recul de l'aile beaucoup plus important au niveau de la patte de fixation supérieure 72 qu'au niveau de la patte de fixation avant 71. Ce recul mal réparti entraînait des déformations importantes et des déchirements de l'aile, accompagnés d'un déplacement important de la partie supérieure de l'aile avant dont le bord arrière pouvait entrer en contact avec l'avant de la portière avant.

Pour éviter ces inconvénients, il est prévu selon l'invention d'assembler la patte de fixation avant 71 de l'aile avant sur un dispositif de fixation comprenant une pièce de liaison déformable 4 fixée aux éléments rigides de la structure du véhicule, au lieu de l'assembler directement sur un élément rigide de la structure. Ainsi, un déplacement maîtrisé de la patte de fixation avant 71 est rendu possible en cas de choc, ce qui a pour effet d'absorber une part de l'énergie du choc et de diminuer l'énergie transmise à la patte de fixation supérieure 72. De plus, le déplacement simultané des pattes de fixation avant 71 et supérieure 72 lors d'un choc permet de limiter les déformations de l'aile avant 7.

Les figures 2, 3 et 4 montrent l'extrémité avant du brancard 1 du châssis du véhicule automobile, sur laquelle est fixée par soudage une platine de brancard 2 de forme carrée, s'étendant dans un plan perpendiculaire à la direction longitudinale du brancard 1. Une tôle de passage de roue 3, ou passage de roue, est également fixée par soudage sur un des côtés du brancard 1. Cette tôle présente une forme bombée lui permettant d'entourer la partie haute d'une roue du véhicule automobile. Le brancard 1, la platine de brancard 2 et la tôle de passage de roue 3 sont des éléments rigides constituant la structure du véhicule.

Une pièce de liaison 4 déformable est fixée par soudage à la structure rigide du véhicule au niveau de ses deux extrémités, et porte une pièce de support 5 sur laquelle peut être assemblée par vissage la patte de fixation avant 71 de l'aile avant 7.

La pièce de liaison 4 est formée d'une plaque, ou tôle d'acier épaisse de 1,17 mm, s'étendant dans des plans horizontaux, et pliée autour d'un axe vertical de façon à présenter une portion longitudinale 41, s'étendant dans la direction longitudinale du véhicule, et une portion transversale 42 s'étendant sensiblement dans la direction horizontale perpendiculaire à la direction longitudinale du véhicule. Les portions longitudinale 41 et transversale 42 de la pièce de liaison 4 sont reliées entre elles par une portion arrondie 43.

Cette pièce de liaison 4 présente une rigidité importante s'opposant à une déformation dans une direction verticale, mais une souplesse relative permettant des déformations dans un plan horizontal. Pour assurer cette souplesse, la portion longitudinale 41 présente deux zones d'affaiblissement 411 et 412, situées de part et d'autre de la pièce de support 5.

Au niveau de ces zones d'affaiblissement, la pièce de liaison 4 est conformée de façon à présenter un moment quadratique par rapport à un axe vertical plus réduit que dans les autres zones. Elle présente notamment dans la première zone d'affaiblissement 411, située entre l'emplacement de la pièce de support 5 et la portion arrondie 43, une hauteur légèrement réduite et un trou en son milieu. Dans ces zones d'affaiblissement 411 et 412, le moment quadratique réduit par rapport à un axe vertical facilite la flexion de la pièce de liaison 4 autour d'un axe vertical.

Selon l'invention, cette pièce de liaison 4 peut subir des déformations d'amplitude importante dans un plan de préférence horizontal. La pièce de liaison 4 et la pièce de support 5 qui lui est fixée constituent donc un dispositif de fixation de l'extrémité avant de l'aile avant 7 permettant un déplacement de cette extrémité avant de l'aile avant par rapport à la structure rigide du véhicule.

L'extrémité arrière de la pièce de liaison 4, correspondant à l'extrémité arrière de la portion longitudinale 41, est fixée à la tôle de passage de roue 3 par trois points de soudure. De même, l'extrémité avant de la pièce de liaison 4, correspondant à une extrémité de la portion transversale 42, est fixée à la platine de brancard 2 par trois points de soudure. La pièce de fixation 5 est fixée par trois points de soudure sur la portion longitudinale 41 de la pièce de liaison 4. Elle n'est donc pas en appui sur la tôle de passage de roue, mais décalée en porte à faux par rapport à celui-ci.

La portion arrondie 43 de la lame 4 est emboutie localement de façon à renforcer sa rigidité. Ainsi, elle présente une bonne rigidité assurant un maintien correct de la pièce de support 5, en évitant les déplacements de l'aile avant dans une direction verticale.

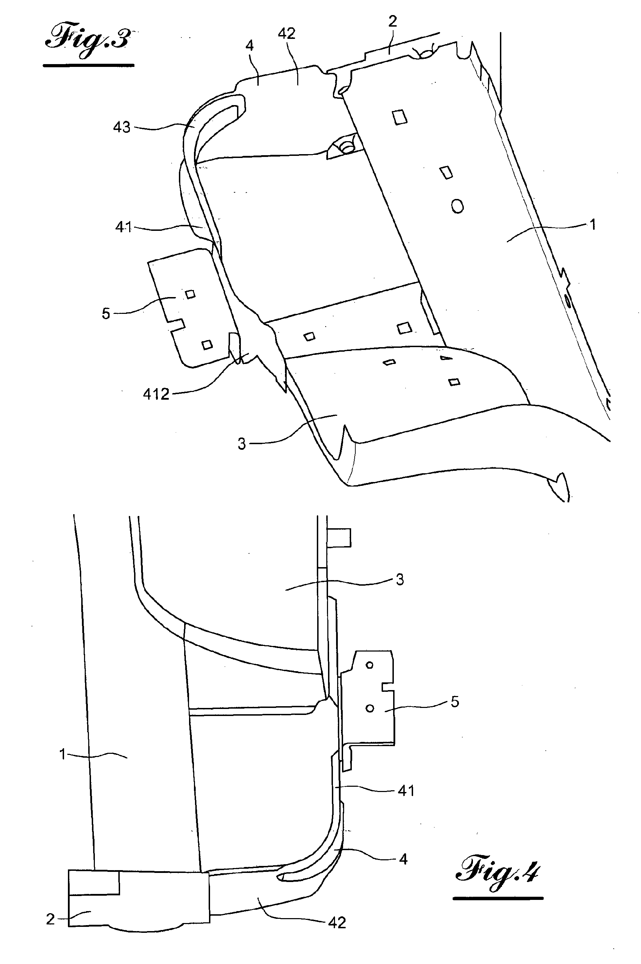

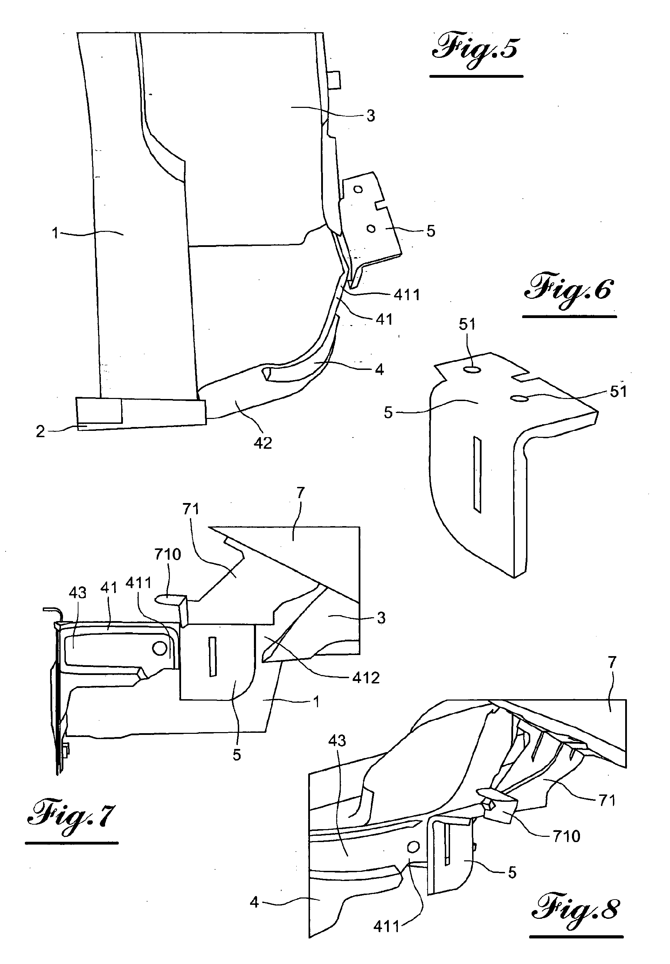

La figure 5 représente les éléments de structure et le dispositif de fixation représentés à la figure 4, dans une position déformée sous l'effet d'un choc repoussant l'aile avant vers l'arrière du véhicule. Sous l'effet de ce choc, la pièce de support 5 est tirée vers l'arrière par l'aile avant qui lui est fixée (non représentée). La pièce de liaison 4 se déforme en se pliant au niveau des zones d'affaiblissement 411 et 412, le long de lignes de pliure sensiblement verticales, de telle sorte que la pièce de support 5 tourne dans un plan horizontal, la partie située vers l'avant de cette pièce 5 s'écartant latéralement du véhicule.

Ce déplacement de la pièce de support 5 entraîne un allongement de la portion de la pièce de liaison 4 située entre la pièce de support 5 et la platine de brancard 2, qui se traduit par une déformation de la portion arrondie 43, ayant pour effet de diminuer l'angle que forment les portions longitudinale 41 et transversale 42. Cette déformation de la pièce de liaison 4 permet d'absorber une partie de l'énergie du choc en autorisant un déplacement limité de l'aile 7 par rapport à la structure du véhicule.

La figure 6 montre la pièce de support 5, destinée à être soudée sur la pièce de liaison 4. Cette pièce de support est réalisée en acier d'épaisseur de 1,67 mm, et présente des trous 51 permettant le passage de vis pour la solidarisation de la patte de fixation, ou fixation avant 71 de l'aile avant 7.

Les figures 7 et 8 montrent une patte de fixation, avant 71, assemblée sur la pièce de support 5 correspondante. On peut voir sur ces figures que la patte de fixation avant 71 de l'aile avant 7 est équipée d'une patte 710 permettant la fixation du bloc optique 6.

## Revendications

1. Dispositif de fixation de l'avant d'une aile avant (7) à la structure d'un véhicule, notamment automobile, comprenant une pièce de liaison (4) fixée d'une part à la structure du véhicule et d'autre part à l'avant de l'aile avant (7) du véhicule, et qui présente au moins une zone d'affaiblissement permettant à la pièce de liaison d'être déformable pour permettre un déplacement contrôlé de l'avant de l'aile avant (7) relativement à la structure du véhicule, en cas de choc, la pièce de liaison (4) étant constituée par une plaque positionnée verticalement, fixée à la structure du véhicule au niveau de ses deux extrémités latérales, **caractérisé en ce que** ladite plaque est pliée autour d'un axe vertical de façon à présenter une première portion (42) s'étendant sensiblement perpendiculairement à la direction d'avancement du véhicule et une seconde portion (41) s'étendant sensiblement perpendiculairement à la direction transversale du véhicule.

2. Dispositif de fixation selon la revendication 1, **caractérisé en ce que** chaque zone d'affaiblissement de la pièce de liaison autorise une déformation de la pièce de liaison dans un plan horizontal.

3. Dispositif de fixation selon la revendication 2 **caractérisé en ce que** ladite pièce de liaison (4) présente au niveau de chaque zone d'affaiblissement (411, 412) une section conformée de façon à présenter un moment quadratique par rapport à un axe vertical plus faible que les autres sections de la pièce de liaison (4), afin de favoriser une déformation par pliage de la pièce de liaison (4) au niveau de lignes de pliures verticales passant par la zone d'affaiblissement (411, 412).

4. Dispositif de fixation selon l'une quelconque des revendications 1 à 3, **caractérisé en ce que** chaque zone d'affaiblissement (411, 412) est située entre la partie de fixation de la pièce de liaison (4) à l'aile et une partie de fixation de la pièce de liaison (4) à la structure.

5. Dispositif de fixation - selon l'une des revendications précédentes, **caractérisé en ce que** ladite plaque comporte une portion arrondie (43) situées entre lesdites première (42) et seconde (41) portions.

6. Dispositif de fixation selon la revendication 5, **caractérisé en ce que** ladite plaque présente au niveau de ladite portion arrondie (43) des reliefs augmentant le moment quadratique de sa section par rapport à un axe vertical.

7. Dispositif de fixation selon l'une quelconque des revendications 1 à 6, **caractérisé en ce que** ladite aile avant (7) est fixée à ladite pièce de liaison (4) par l'intermédiaire d'une pièce de support (5) solidaire de la pièce de liaison.

8. Véhicule automobile **caractérisé en ce qu'**il est équipé d'au moins un dispositif de fixation d'une aile avant (7) selon l'une quelconque des revendications 1 à 7.

## Patentansprüche

1. Befestigungsvorrichtung der Vorderseite eines vorderen Flügels (7) der Struktur eines Fahrzeugs, insbesondere eines Kraftfahrzeugs, die ein Verbindungsteil (4) aufweist, das einerseits an der Struktur des Fahrzeugs und andererseits an der Vorderseite des vorderen Flügels (7) des Fahrzeugs befestigt ist und mindestens eine Schwächungszone aufweist, die es dem Verbindungsteil erlaubt, verformbar zu sein, um ein gesteuertes Verlagern von der Vorderseite des vorderen Flügels (7) in Bezug auf die Struktur des Fahrzeugs bei einem Stoß zu erlauben, wobei das Verbindungsteil (4) aus einer Platte, die vertikal positioniert ist, besteht, die an der Struktur des Fahrzeugs im Bereich ihrer zwei seitlichen Enden befestigt ist, **dadurch gekennzeichnet, dass** die Platte um eine vertikale Achse derart gefaltet ist, dass sie einen ersten Abschnitt (42) aufweist, der sich im Wesentlichen senkrecht zu der Fahrtrichtung des Fahrzeugs erstreckt, und einen zweiten Abschnitt (41), der sich im Wesentlichen senkrecht zu der Querrichtung des Fahrzeugs erstreckt.

2. Befestigungsvorrichtung nach Anspruch 1, **dadurch gekennzeichnet, dass** jede Schwächungszone des Verbindungsteils eine Verformung des Verbindungsteils in einer horizontalen Ebene erlaubt.

3. Befestigungsvorrichtung nach Anspruch 2, **dadurch gekennzeichnet, dass** das Verbindungsteil (4) im Bereich jeder Schwächungszone (411, 412) einen Querschnitt aufweist, der derart gestaltet ist, dass er ein quadratisches Moment in Bezug auf eine vertikale Achse aufweist, die schwächer ist als die anderen Querschnitte des Verbindungsteils (4), um eine Verformung durch Falten des Verbindungsteils (4) im Bereich der vertikalen Faltlinien, die durch die Schwächungszone (411, 412) durchgehen, zu erleichtern.

4. Befestigungsvorrichtung nach einem der Ansprüche 1 bis 3, **dadurch gekennzeichnet, dass** jede Schwächungszone (411, 412) zwischen dem Befestigungsteil des Verbindungsteils (4) an dem Flügel und einem Befestigungsteil des Verbindungsteils (4) an der Struktur liegt.

5. Befestigungsvorrichtung nach einem der vorhergehenden Ansprüche, **dadurch gekennzeichnet, dass** die Platte einen gerundeten Abschnitt (43) aufweist, der zwischen dem ersten (42) und dem zweiten (41) Abschnitt liegt.

6. Befestigungsvorrichtung nach Anspruch 5, **dadurch gekennzeichnet, dass** die Platte im Bereich des gerundeten Abschnitts (43) Reliefs aufweist, die das quadratische Moment ihres Querschnitts in Bezug auf eine vertikale Achse erhöhen.

7. Befestigungsvorrichtung nach einem der Ansprüche 1 bis 6, **dadurch gekennzeichnet, dass** der vordere Flügel (7) an dem Verbindungsteil (4) über ein Tragteil (5), das mit dem Verbindungsteil fest verbunden ist, befestigt ist.

8. Kraftfahrzeug, **dadurch gekennzeichnet, dass** es mit mindestens einer Befestigungsvorrichtung eines vorderen Flügels (7) nach einem der Ansprüche 1 bis 7 ausgestattet ist.

## Claims

1. A device for attaching the front of a front fender (7) to the structure of a vehicle, in particular an automobile, including a linking part (4) connected on the one hand to the structure of the vehicle and on the other hand to the front of the front fender (7) of the vehicle, and which has at least one weakening area enabling the linking part to be deformable for enabling a controlled movement of the front of the front fender (7) relative to the structure of the vehicle in the event of an impact, the linking part (4) being constituted by a vertically positioned plate, fixed to the structure of the vehicle at the level of its two lateral ends, **characterized in that** said plate is bent about a vertical axis so as to present a first portion (42) extending substantially perpendicularly to the direction of advancing of the vehicle, and a second portion (41) extending substantially perpendicularly to the transverse direction of the vehicle.

2. The attaching device according to claim 1, **characterized in that** each weakening area of the linking part permits a deformation of the linking part in a horizontal plane.

3. The attaching device according to claim 2, **characterized in that** said linking part (4) has at the level of each weakening area (411, 412) a section shaped so as to present a second moment of area with respect to a vertical axis smaller than the other sections of the linking part (4), so as to promote a deformation by bending of the linking part (4) at the level of vertical fold lines passing through the weakening area (411, 412).

4. The attaching device according to any one of claims 1 to 3, **characterized in that** each weakening area (411, 412) is situated between the attaching part of the linking part (4) to the fender and an attaching part of the linking part (4) to the structure.

5. The attaching device according to one of the preceding claims, **characterized in that** said plate comprises a rounded portion (43) situated between said first (42) and second (41) portions.

6. The attaching device according to claim 5, **characterized in that** said plate has, at the level of said rounded portion (43), reliefs increasing the second moment of area of its section with respect to a vertical axis.

7. The attaching device according to any one of claims 1 to 6, **characterized in that** said front fender (7) is attached to said linking part (4) by means of a support part (5) integral with the linking part.

8. A motor vehicle **characterized in that** it is equipped with at least one device for attaching a front fender (7) according to any one of claims 1 to 7.
